# EUROPEAN PATENT APPLICATION

(11) **EP 0 808 853 A2**
(43) Date of publication of application: **26.11.1997**
(21) Application number: 97113581.9
(22) Date of filing: 17.07.1992
(51) Int. Cl.: C08F 8/32, C08F 8/28, C08F 20/56

(54) **Polyacrylamide gel matrix**

(30) Priority: 17.07.1991 US 731427
(62) Divisional of application: 92917833.3
(71) Applicant: NATIONAL DIAGNOSTICS, Atlanta, GA 30336 (US)
(72) Inventor: Mirsky, Jeffrey, Atlanta, GA 30350 (US); Schwartz, Arthur, Belle Mead, NJ 08835 (US)
(74) Representative: Goldin, Douglas Michael

(57) **Abstract**

A method for forming a solid gel matrix, comprising the steps of:
contacting together in solution:
   (a) homopolymeric or heteropolymeric polyacrylate molecules comprising one or more ester groups and
   (b) an amine adapted to covalently bond with at least two of said ester groups on separate polyacrylamide molecules to covalently bond said separate polyacrylamide molecules together; wherein sufficient said covalent bonds are formed to cause said solution to form a solid gel matrix.

## Description

### Field of the Invention

This invention relates to polyacrylamide gel matrices and methods for their formation.

### Background of the Invention

Acrylamide is commonly polymerized to form a polyacrylamide gel matrix by addition of an initiator such as ammonium persulfate, TEMED, riboflavin, or peroxide. In addition, small amounts of crosslinkers such as N,N'-methylene bis acrylamide may be added to the acrylamide before initiation to form a rigid gel. In a typical polyacrylamide gel matrix preparation, the acrylamide monomer and a suitable crosslinker are dissolved in water, and a small amount of initiator added to begin the polymerization process. Oxygen is generally excluded during this polymerization process since it inhibits polymerization.

The rigid polyacrylamide gel matrices are useful for the separation of biological substances, e.g., DNA fragments and proteins by electrophoresis or other active or passive diffusive methods.

Many publications exist which describe use of various crosslinkers in formation of polyacrylamide gels, mixing of polyacrylamide with other gelling agents, and chemical modification of the polyacrylamide structure. For example, Richards and Lecanidou, Electrophoresis and Isoelectric Focusing in Polyacrylamide Gels, Walter de Gryster, NY, p. 16, 1974, describe the kinetics of polymerization of polyacrylamide gels, and the effect of crosslinking on gel properties; Brown et al., Electrophoresis ed. B. Berlin, p. 235, 1979, notes that use of the crosslinker ethylene diacrylate results in a polyacrylamide gel which is soluble in 1M NaOH at 37°C; Baumann and Chrambach, 70 Anal. Chem. 32, 1976 describe use of the crosslinker DATD (N,N'-diallyltartar-diamide) to form polyacrylamide gels of large pore size; Nochumson, U.S. Patent 4,504,641, describes use of a polysaccharide as a crosslinking agent in polyacrylamide gels; Bode, 83 Anal. Biochem. 204, 1977, describes use of a mixture of liquid polyacrylamide and agar to form a gel; and Cyanamid, "Cyanamer Polyacrylamides For the Processing Industry, American Cyanimid Co., Chemical Products Division, Process Chemical Dept. Wayne, NJ 07470, describes formation of modified polyacrylamides; e.g., methylolation by formaldehyde by mixing polyacrylamide with formaldehyde at 37°C at pH 10-10.5, followed by hydroxylamine treatment, and various other modifications using combinations of formaldehyde and other chemicals.

### Summary of the Invention

Applicant has discovered that a useful polyacrylamide or polyacrylate gel can be formed by reacting a chemically modified or unmodified polyacrylamide solution and a chemically reactive crosslinking agent together. With this method, electrophoretic gels can be produced which offer a combination of properties not observed with conventional polyacrylamide gels (formed directly from monomeric acrylamide), agarose gels or derivatized agarose gels (see e.g., Guiseley, U.S. Patent 3,956,273, and Cook, U.S. Patent 4,319,975). The advantages of the gels of this invention, and the methods for their production include:
1. Production of a thermally disruptable gel matrix which can be liquified and remain liquified at relatively low temperature (40°C-100°C). The use of such a low temperature maintains the integrity of biological function of the material separated by the gel matrix, and permits release of the samples in the gel matrix without further separation or purification. In contrast, while agarose gels melt on heating, they resolidify on cooling to room temperature, thus, they do not permit manipulation, in liquid form, of those molecules separated by the electrophoretic process without further manipulations, e.g., dilution of the agarose.
2. A user is not exposed to the neurotoxic monomers or toxic initiators required in the conventional polyacrylamide gel casting procedure.
3. Gel clarity is superior to that of agarose and derivatized agarose.
4. The sieving characteristics of the gel matrix are superior to those of agarose or conventional polyacrylamide, especially for samples including DNA fragments having between ten base pairs and twenty thousand base pairs.
5. Unlike agarose matrices, those of this invention contain no contaminating biologically interfering compounds. Thus, no purification of molecules separated in these matrices is required from such contaminants, when these molecules are removed from the matrix for use or analysis.

In one example of the method, polyacrylamide of a chosen molecular weight is crosslinked with a bifunctional compound, such as a bialdehyde, to provide a crosslinked polyacrylamide gel. No acrylamide or hazardous initiator, such as ammonium persulfate and TEMED, or peroxide is required. In addition, the gel matrix will polymerize to form a rigid gel even in the presence of air or oxygen.

More specifically, a polyacrylamide molecule of molecular weight 500-6,000,000, is used as a preformed solid powder, or can be generated in situ as a pure homopolyacrylamide or a copolymer solution. The polyacrylamide is crosslinked via amide groups in its structure by a bialdehyde in a basic solution. The crosslinking reaction can also be performed with a monoaldehyde or higher aldehydes. Typically, the polyacrylamide is dissolved in water, the aldehyde added, a base is added, and after a period of time a gel is formed. If desired, the reaction mixture can be heated (e.g., to 55°C or higher) or cooled to increase or decrease the gelation rate respectively. The gelation reaction can be performed in any size or shape vessel, either open to the atmosphere or closed, in accordance with the desired shape and dimensions of the final gel.

Similarly, crosslinked polyacrylate gels can be formed by mixing polyacrylate (containing one or more ester groups) of a chosen molecular weight with an amine, e.g., a biamine or higher amine.

Gel matrices produced according to the invention are useful as substitutes for existing electrophoretic agarose or polyacrylamide gels.

Thus, in a first aspect, the invention features a method for forming a solid gel matrix, including contacting together in an alkaline solution: (a) homopolymeric or heteropolymeric polyacrylamide molecules having one or more amide groups and (b) an aldehyde adapted to covalently bond with at least two of the amide groups on separate polyacrylamide molecules to covalently bond the separate polyacrylamide molecules together. In the method, sufficient covalent bonds are formed between the polyacrylamide molecules to cause the solution to form a solid gel matrix.

In a related aspect, the invention features a method for forming a solid gel matrix by contacting together in an alkaline solution: (a) homopolymeric or heteropolymeric polyacrylate molecules comprising one or more ester groups and (b) an amine adapted to covalently bond with at least two of the ester groups on separate polyacrylate molecules to covalently bond the separate polyacrylate molecules together. Again, sufficient covalent bonds are formed between the polyacrylate molecules to cause the solution to form a solid gel matrix.

In preferred embodiments of the above aspects, the polyacrylamide or polyacrylate molecules each have a molecular weight of between 500 and 6 million, more preferably between 50,000 and 600,000, even more preferably between 200,000 and 400,000; the polyacrylamide molecules crosslinked with aldehyde contain carbon-nitrogen amide bonds which can be cleaved by heating to temperatures between 40°C and 100°C; the polyacrylamide molecules crosslinked with glyoxal contain vicinal dihydroxy carbon-carbon bonds which can be cleaved by periodate at a temperature between 0°C and 40°C; the polyacrylamide molecule is a heteropolymer and includes amide and ester groups; the concentration of the polyacrylamide or polyacrylate molecules in the solution, and the molecular weight of these molecules is chosen to form a gel matrix adapted for separation of macromolecules, such as DNA fragments consisting essentially of between ten base pairs and twenty thousand base pairs, and to form an optically clear gel matrix, e.g., the solid gel matrix is adapted to allow physical separation of the five DNA fragments of HaeIII-treated pBR322 of 587, 540, 504, 458, and 434 base pairs, or lambda EcoRI-HindIII DNA fragments of 5148, 4973, and 4277 base pairs, or lambda HindIII fragments of 23,000, 9416, 6557 and 4361 base pairs; and the gel matrix is formed in the presence of oxygen, or air.

In other preferred embodiments, the polyacrylamide molecules have the chemical formula 1: 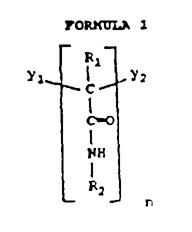 and the polyacrylate molecules have the chemical formula 4: 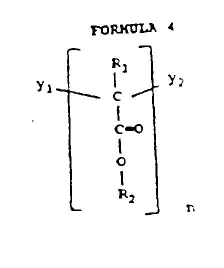 where each R₁ and R₂ may be the same or different and are generally chosen from hydrogen or another chemical group which does not interfere with formation of the desired covalent bonds formed in the crosslinking process; Y₁ and Y₂ may be the same or different, and each represents a portion of a polyacrylamide or polyacrylate chain (having a molecular weight of between 250 and 6 million), a portion of an acrylamide or acrylate molecule, or a hydrogen or CH₃ group; and n is between 1 and 300,000, more preferably between 100 and 100,000, and most preferably between 500 and 10,000.

In more preferred embodiments, R₁ and R₂ are selected from hydrogen, methyl, ethyl, propyl, isopropyl, phenyl, 1-hydroxyethyl, 2-hydroxyethyl, hydroxymethyl, 2-hydroxypropyl, 3-hydroxypropyl, 3-dimethylaminopropyl, 2-dimethylaminoethyl, glycinyl, trishydroxymethylmethyl, benzyl, phenyl, carboxy-α-hydroxymethyl methyl ester, and 3-methoxypropyl; the aldehyde is a monoaldehyde or a bialdehyde, e.g., the monoaldehyde has the chemical formula R-CH=0, and the bialdehyde has the chemical formula 0=HCRCH=0, where R is an organic moiety having between 1 and 10 carbons, e.g., formaldehyde (where the contacting step includes heating the solution to at least 50°C) or R is a chemical bond, e.g., glyoxal. Examples of R include paraffinic, olefinic, or aromatic moieties which may contain oxygen, nitrogen, sulfur, boron, fluorine, chlorine, bromine, iodine, sodium, or potassium that may be cyclic, linear or branched; and examples of aldehydes include glutaraldehyde, malonaldehyde, ortho, meta or paraphthalaldehyde, adipaldehyde and hydroxyadipaldehyde.

In yet other preferred embodiments, the solid gel matrix includes a crosslinked polyacrylamide or polyacrylate having the formula 2 or 3: 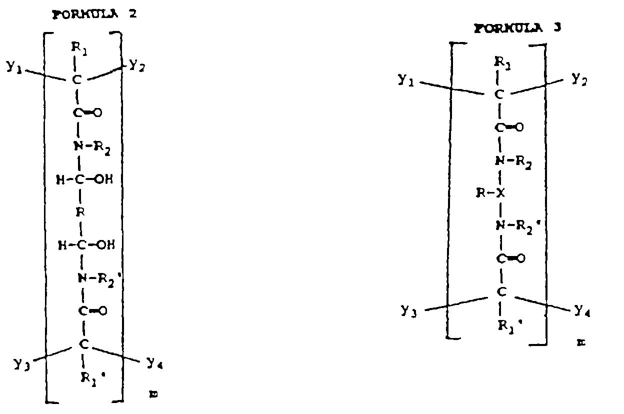 where R and X separately are organic molecules having between 1 and 10 carbon atoms, (e.g., X may be C), and R may also be simply a chemical bond, and where R₁, R₂, R₁', and R₂' are the same or different and have a chemical formula chosen from hydrogen or another chemical group which does not interfere with formation of the desired covalent bond, m is between 1 and 300,000; and each Y₁, Y₂, Y₃, and Y₄ may be the same or different, and each represent a portion of a polyacrylamide or polyacrylate chain or a portion of an acrylamide or acrylate molecule, hydrogen, or a CH₃ group.

In still other preferred embodiments, the method further includes the step of forming the polyacrylamide or polyacrylate by contacting acrylamide and/or acrylate with an initiator, e.g., triethanolamine, triethylamine or TEMED and ammonium persulfate; and the step of forming the polyacrylamide or polyacrylate includes forming a polyacrylamide or polyacrylate with a molecular weight between 500 and 6 million, or intermediate molecular weights, as described above.

In related aspects, the invention features polyacrylamide or polyacrylate gel matrices including polyacrylamide or polyacrylate molecules held together by a plurality of identical crosslinking groups. In preferred embodiments, these crosslinking groups have one of the formulae:

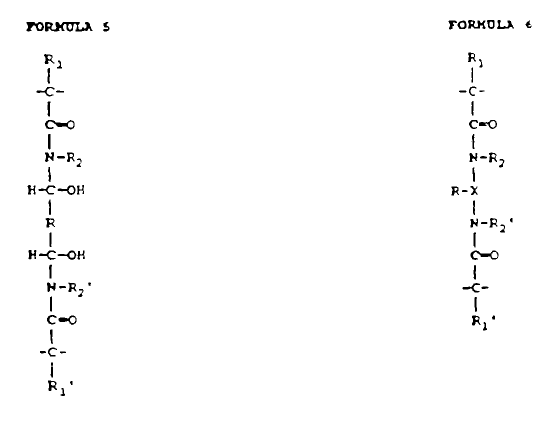

Applicants are the first to provide polyacrylamide and polyacrylate matrices which have such identical crosslinking groups (and no other crosslinking group). Thus, they are the first to provide a matrix with a more defined chemical structure.

In other related aspects, the invention features a gel matrix formed by any of the above-described methods; a polyacrylamide or polyacrylate gel matrix including a crosslinked polyacrylamide or polyacrylate having the above chemical formula 2 or 3, with the gel matrix adapted to separate the five DNA fragments of HaeIII-treated pBR322 having 587, 540, 504, 458, and 434 base pairs, or lambda EcoRI-HindIII DNA fragments of 5148, 4973, and 4277 base pairs, or lambda HindIII fragments of 23,000, 9416, 6557 and 4361 base pairs; a kit for forming a gel matrix which includes in separate containers polyacrylamide molecules, (e.g., of formula 1 above) having one or more amide groups, and in a separate container an aldehyde having a plurality of aldehyde groups, where the aldehyde is each adapted to covalently bond with at least two of the amide groups on separate polyacrylamide molecules to covalently bond the separate polyacrylamide molecules together to form sufficient covalent bonds to cause the solution to form a gel matrix; and a kit for forming a gel matrix which includes in separate containers polyacrylate molecules, e.g., of formula 4: 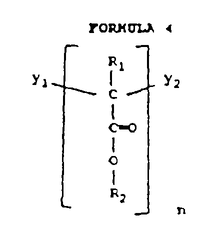 (where R₁, R₂, Y₁, and Y₂ and n are as defined above), having one or more ester groups, and in a separate container an amine having at least one amine group, where the amine is each adapted to covalently bond with at least two of the ester groups on separate polyacrylate molecules to covalently bond the separate polyacrylate molecules together to form sufficient covalent bonds to cause the solution to form a gel matrix.

In yet another aspect, the invention features a method for purifying a biological macromolecule by passing the biological macromolecule through a gel matrix formed by the methods described above to separate the biological macromolecule from other components with which it occurs.

In preferred embodiments, the method further includes removing the biological macromolecules from the gel matrix by liquefying the gel matrix, e.g., by heating at between 40°C and 100°C, or by treatment with periodate at a temperature between 4°C and 40°C.

While applicant is particularly interested in formation of gel matrices for separation of biological molecules, it is recognized that gel matrices of this invention are useful in a wide variety of other fields, e.g., for cosmetics, such a face packs, for wound dressings, and other uses well known to those in the art. It can also be used for reduction molding as described below.

Other features and advantages of the invention will be apparent from the following description of the preferred embodiments thereof, and from the claims.

### Description of the Preferred Embodiments

The drawings will first briefly be described.

### Drawings

Figs. 1 and 2 are representations of chemical reactions to form polyacrylamide from acrylamide monomers;
Fig. 3 is a representation of a chemical reaction to form a crosslinked polyacrylamide gel matrix of this invention from polyacrylamide and a bialdehyde;
Fig. 4 is a representation of a chemical reaction to form a crosslinked polyacrylamide gel matrix from polyacrylamide and a monoaldehyde;
Fig. 5 is a representation of a chemical reaction to form an acrylate-containing polyacrylamide, and its subsequent reaction in a method of this invention to form a crosslinked polyacrylamide using a biamine; and
Figs. 6A-6B are representations of chemical reactions which solubilize polyacrylamide gels of this invention.
Figs. 7A and 7B are photographs of a gel of this invention, and a 4% agarose gel, respectively, showing relative separations of HaeIII-digested pBR322 DNA.

### Polyacrylamide and Polyacrylate

Polyacrylamide and polyacrylate molecules useful in this invention are generally described above. For example they preferably have a molecular weight between 500 and 6,000,000 and can be obtained as a preformed commercially available solid powder, or can be generated in situ from a suitable acrylamide or acrylate monomer, or from a combination of monomers, to produce either a pure homo- or heteropolyacrylamide (also called copolyacrylamide) or homo- or hetero- polyacrylate.

Below is provided details of formation of suitable polyacrylamides. Analogous details apply for formation of polyacrylates, well known to those in the art.

### Formation of Polyacrylamide

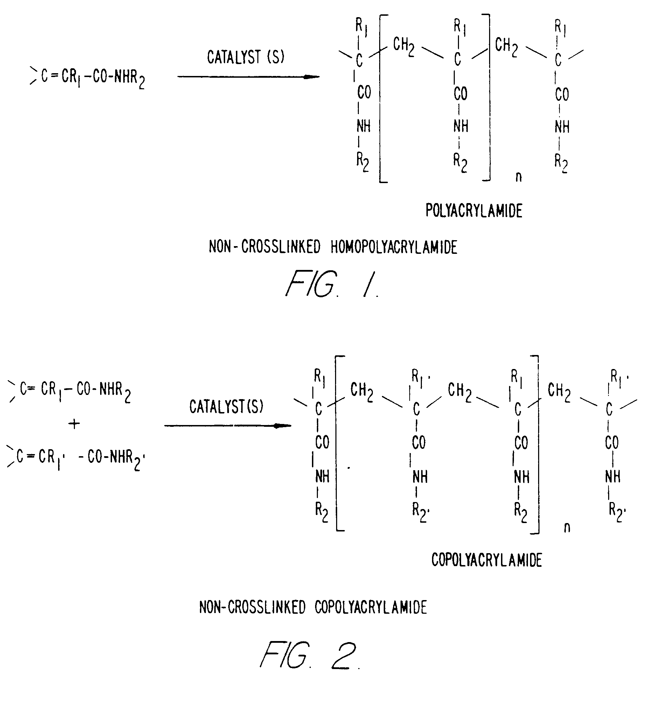

Referring to Fig. 1, there is shown in schematic form the production of polyacrylamide from acrylamide. This reaction is performed by use of a catalyst, as discussed above, and in the absence of oxygen. Each R₁ and R₂ group can be the same or different and the choice of such groups is well known in the art. The number of covalently linked acrylamide molecules (i.e., "n" in Fig. 1) can be varied by standard procedure, and preferably is chosen to give the desired molecular weight.

Referring to Fig. 2, a polyacrylamide can also be produced by using more than one derivatized acrylamide monomer; here each derivative is shown as R₁, R₂, R_{¹}' and R₂', all well known to those in the art. Of course the actual sequence of R₁ and R₁' (and corresponding R₂ and R₂') along the length of the polyacrylamide molecule will vary dependent upon the sequence of chemical reaction of the two monomers--thus, the actual mixed polyacrylamide shown in Fig. 2 is only one example of the possible mixed polyacrylamides that can be formed.

The above-noted R groups can be chosen to impart desired chemical properties to the monomers and the resulting polymers. These qualities include water solubility, low toxicity, low steric bulk to afford rapid polymerization, a nitrogen-hydrogen bond (N-H) without which crosslinking cannot occur, and minimal ultraviolet light absorption. Examples of R₁ and R₁' may include, but are not limited to: hydrogen, methyl, ethyl, propyl, isopropyl, phenyl, 1-hydroxyethyl, 2-hydroxyethyl, hydroxymethyl, 2 or 3-hydroxypropyl; and examples of R₂ and R₂' can include, but are not limited to: hydrogen, methyl, ethyl, propyl, isopropyl, 1 or 2-hydroxyethyl, hydroxymethyl, 2 or 3-hydroxypropyl, 3-dimethylaminopropyl, 2-dimethylaminoethyl, glycinyl, trishydroxymethylmethyl, benzyl, phenyl, carboxy-α-hydroxymethyl methyl ester, 3-methoxypropyl.

In practice, acrylamide is dissolved in water with catalyst and co-catalyst. Polymerization will take place in a stoppered vessel with or without the administration of nitrogen gas or application of a vacuum. Polymerization will also take place in an open vessel if the surface of the liquid is blanketed with nitrogen, or if the contents are internally purged with nitrogen. If the vessel has a constrictive opening, polymerization may take place without nitrogen.

### Molecular Weight

In the invention, polyacrylamide in the molecular weight (MW) range of 500-6,000,000 is useful, but a preferred MW range is 50,000-600,000. If the MW of polyacrylamide is too low, subsequent gelation may never occur. If the molecular weight of the polyacrylamide is too high, the polymer solution becomes very viscous and difficult to pour. MW also affects other factors, as described below.

### Gelation Rate

The rate of gelation is directly proportional to the MW of the polyacrylamide. High MW leads to rapid gelation and low MW leads to slow gelation (>4 hours). The rate of gelation of gel matrices of this invention is also proportional to pH. At high pH (9-10) gelation is fast (i.e., within 4 hours), at low pH (7-8) gelation is slow. If the polymer solution has a low pH (6.5-7.5), even a large amount of externally added base, such as sodium carbonate, will not be able to overcome the buffering capacity of the solution and gelation will proceed slowly. If the native pH of the polymer solution is high (8.0-9.0), a small amount of the external base will still cause fast gelation. In some cases when the endogenous pH of the polymer solution is too low (<6), even if external base is added in quantities to create a pH that would normally produce rapid gelation, gelation is still very slow. The optimal pH of the polymer solution is 8-9. In this range the polymer is stable, with little loss in amide groups due to hydrolysis, yet small amounts of external base are required to obtain fast gelation. Even without the external base added, the polymer solution in the pH range of 8-9 can gel within 30 minutes to 4 hours.

A polyacrylamide solution of manageable viscosity can be made to gel very rapidly if other parameters, such as quantity of external base, amount of bialdehyde or equivalent crosslinker, and temperature, are properly adjusted.

### Gel Strength

Gel strength diminishes as polyacrylamide MW decreases. The MW should be such that a polymer solution with useful flow properties is made to gel at a convenient rate to produce a gel of good mechanical strength that can withstand various physical manipulations necessary in later use of the gel matrix.

### Gel Resolution

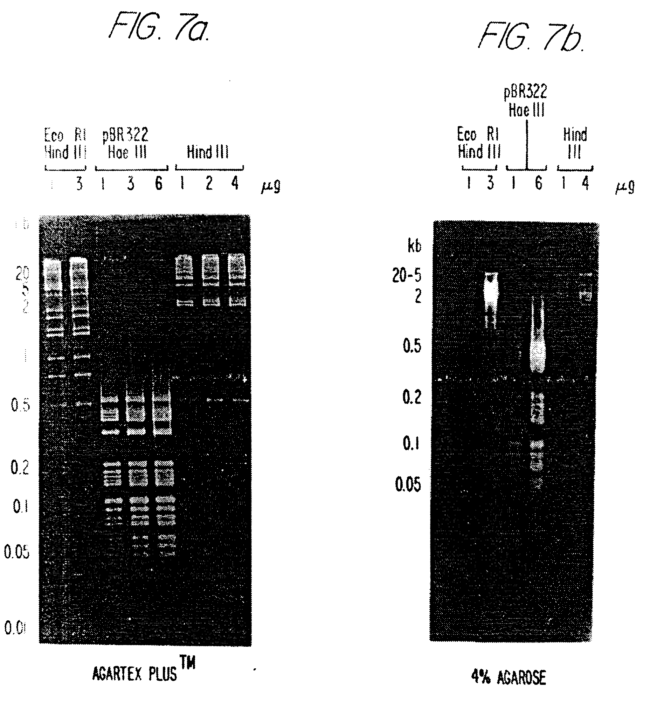

It is also important for some uses to have a gel matrix formed with adequate electrophoretic resolving power. If the MW is too high, the resolution will diminish. Gel matrices of this invention provide excellent resolution, that is, the ability to separate DNA fragments which are very similar in size. For example, referring to Fig. 7A, there is shown a region in the electrophoretic pattern of a plasmid sample (HaeIII-digested pBR322) consisting of 5 fragments of size 587, 540, 504, 458, and 434 base pairs (bp). With certain desired matrices of this invention, each fragment can be clearly and distinctly seen (see e.g., Iµg digest in Fig. 7A, and are defined herein as "separated"). In other matrices (Fig. 7B), two or three of the fragments at 540, 504 and 458 bp can be seen as one or two bands only (see e.g., 1µg digest in Fig. 7B; these are not "separated" as the term is used in this application). A sample of large DNA fragments, such as lambda DNA digested by HindIII, shows bands at 23,000, 9416, 6557 and 4361 bp. These bands can all be seen in certain gel matrices of this invention as being clearly separated. In another sample of lambda DNA, digested first by EcoRI and then by HindIII, more than the three expected bands at 5148, 4973 and 4277 bp can be seen on these gels. The original assignments of these bands were based on agarose electrophoresis, but since the matrix system of this invention has greater resolution than agarose, it separates each component into fragments which were heretofore unknown. Thus, the systems of this invention have the ability to separate fragments which differ in size by 5 or fewer base pairs in a total of over 500 base pairs.

### Porosity

As discussed above, by choosing the appropriate concentrations and the ratio of catalyst and promoter, it is possible to produce polyacrylamide of the desired MW range. In its application relating to electrophoretic gels, the molecular weight of the polyacrylamide of the three-dimensional gel network has a significant influence on the porosity and strength of the gel. Lower molecular weight polyacrylamides produce low porosity gels, and higher molecular weight polyacrylamides produce higher porosity gels. Higher molecular weight polyacrylamides also produce gels with greater tensile strength than do the lower polyacrylamide molecules. Therefore, in addition to varying the degree of crosslinking, the porosity of a gel can be controlled by molecular weight selection, which can be tuned very accurately by adjustment of the concentrations and ratios of the catalyst and promoter. An additional dimension of resolution has thus been added to gel electrophoresis which heretofore could not be accomplished.

Porosity can be varied by controlling the quantity of crosslinker, aldehyde, or amine. More aldehyde or amine produces more crosslinks and creates a gel of lower porosity. If the pores are too small, even small DNA may not enter the pore and, as a result, resolution will be diminished by a back up in the flow of macromolecules through the gel. Porosity, like the other above discussed parameters, must be optimized by adjusting crosslinker concentration. A large DNA fragment that does not fit the pores at all passes through the void volume of the gel. Increasing the mass percentage of the gel decreases the void volume. If there is too little void volume, large DNA will not enter the gel and resolution is lost. If the void volume is too large, selectivity and hence resolution is lost. Void volume, like porosity, should be optimized, e.g., by adjusting the concentration of polyacrylamide.

Thus, low molecular weight polyacrylamide offers the advantages of forming free flowing solutions giving gel matrices with good resolution, or band separation, within the DNA fragment range of 10 to 10,000 base pairs. High MW polyacrylamide solutions, however, produce gel matrices which offer the advantages of faster gelation times and greater mechanical strength. Those in the art will recognize which gel matrix is desirable in any particular use. Thus, a gel matrix for biomolecular separation is preferably formed from polyacrylamide of molecular weight 50,000-600,000; while a gel matrix for use in cosmetics may be formed with higher molecular weight polyacrylamide.

### Measurement of Molecular Weight

Viscometric measurements can be used to readily determine the MW of a polyacrylamide by comparison with reference polyacrylamides of known MW. In general, high concentrations of catalysts and/or promoters produce more free radical initiators which start growth of more polymer chains in a unit time. Hence, more short chains are generated. In contrast, when low catalyst concentrations are utilized, longer polymer chains are formed. Even though the relationship of catalyst concentration to MW is known in the art, the optimal MW for any desired application may be chosen empirically, e.g., by observation of electrophoresis data with a chosen gel matrix, using techniques well known in the art.

### Initiators

Initiation of polymerization of the monomer(s) can be affected by a variety of means. Sodium, potassium or ammonium persulfate, either alone or at an elevated temperature or in combination with a promoter or co-catalyst, specifically tetramethylethylenediamine (TEMED), make effective initiator systems for this polymerization. Applicant has discovered, however that triethanolamine and triethylamine also make efficient promoters. Triethanolamine is of special significance as a promoter because its low pK₈ and non-aggressive chemical reactivity belie its efficiency in such a process. Triethanolamine is an odorless viscous liquid with virtually no chronic health problems. It is also a constituent of numerous cosmetic and health care products, thus making use of the resulting gel matrix as a cosmetic more suitable than use of a more toxic initiator. In addition, we have found that triethanolamine is more suitable in electrophoretic separation of biomolecules. For example, after a gel is formed by crosslinking polyacrylamide, the residual promoter (TEMED or triethanolamine) causes the alkalinity of the gel to increase during electrophoresis (ionic components of the gel buffer are removed by the current, but TEMED or triethanolamine, which are neutral, remain in the gel without their base strength being moderated by other ions). The increased alkalinity can cause breakdown of the gel structure and can also denature DNA. Therefore, the more moderate base, triethanolamine, is more desirable.

### Crosslinking

In the method of this invention, the above polyacrylamide solution, or a preformed polyacrylamide material, is dissolved in water and gelled in the presence of an aldehyde, and a base. Depending upon the endogenous alkalinity of the in situ polyacrylamide solution, the base can be omitted. Alternatively, a polyacrylate is dissolved in water and gelled in the presence of an amine.

### Bialdehyde

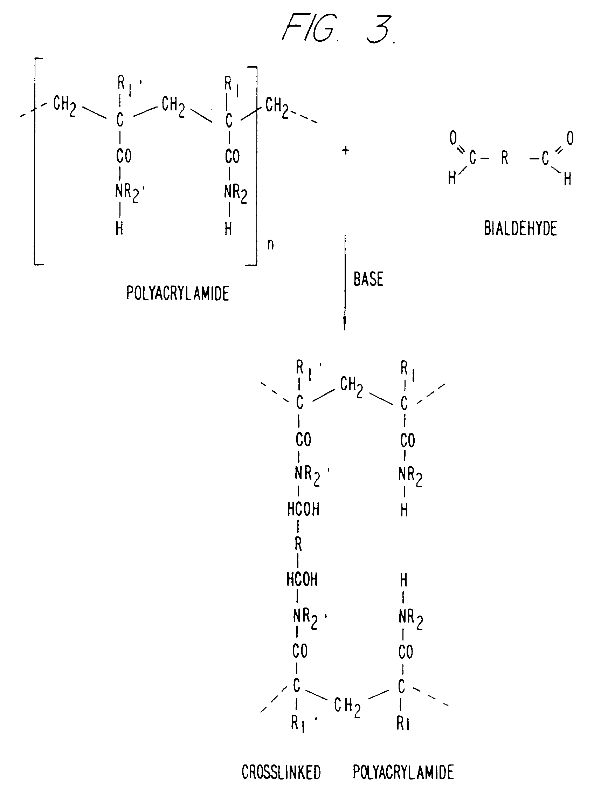

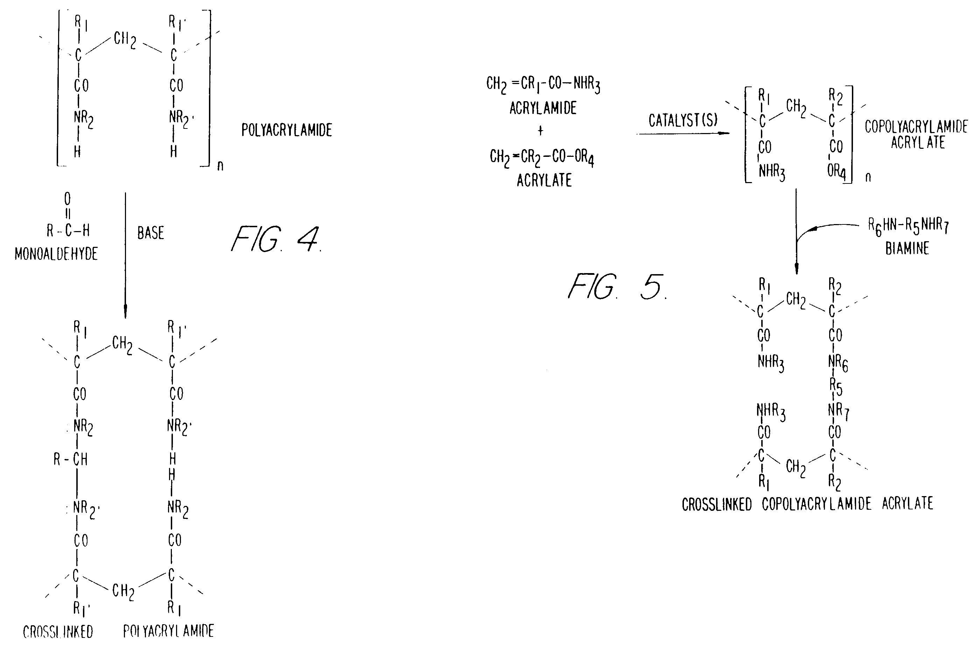

A general scheme for the reaction with a bialdehyde is provided in Fig. 3. In this figure, R is a chemical bond, or any group which does not interfere with the desired crosslinking reaction, for example it may be a paraffinic, olefinic or aromatic moiety and may contain, but is not limited to, carbon and hydrogen atoms. Any other known atom, in particular oxygen, nitrogen, sulfur, boron, fluorine, chlorine, bromine, iodine, sodium or potassium, may be a constituent of the representative R group. The representative R group in bialdehydes and monoaldehydes (see Fig. 4) may also be cyclic, linear or branched. More specifically, representative aldehydes are glyoxal, glutaraldehyde, malonaldehyde, ortho, meta or paraphthalaldehyde, adipaldehyde or hydroxadipaldehyde.

As relates to the base in Fig. 3, this entity can be any non-nucleophilic inorganic or organic basic buffer system. Non-nucleophilic means that the base will only remove a proton, it will not attack the carbonyl carbon of the aldehyde crosslinker. A nucleophilic base would do both. Primary and secondary amines are nucleophilic bases because of their NH bonds. Tertiary amines, (R)₃N, have no N-H bond and are too sterically bulky to attach the aldehyde; thus, they are non-nucleophilic. Hydroxide is an example of a nucleophilic inorganic base.

Specific representative basic systems are: sodium, potassium or lithium borate; tri- or di- sodium phosphate; sodium, potassium or lithium hydroxide; sodium, potassium or lithium carbonate; sodium, potassium or lithium bicarbonate; calcium carbonate, calcium hydroxide, EDTA, triethylamine, trimethylamine, triethanolamine, TEMED, dimethylaniline, tributylamine, methyldiethanolamine, pyridine, dimethylaminopyridine, 4-(dimethylamino) phenethyl alcohol, hexamethylenetetramine, and N-methylmorpholine.

Although one formula of a crosslinked polyacrylamide is provided in Fig. 3, it will be clear to those in the art that this is only a representative formula. The actual crosslinks can be formed between any available amide group in the polyacrylamide molecules and such crosslinks may occur at each amide group or only a few. Clearly, the extent of crosslinking depends on the chemical reagents used, their concentrations, and the pH and temperature of the reaction. By varying these components, any desired porosity and rigidity of gel can be obtained as described above. (In Fig. 3, as in other Figures, the covalent linkage of the crosslinked moiety to the remainder of a polyacrylamide molecule is indicated by broken lines.)

Gels produced as a result of the crosslinking reaction shown in Fig. 3 can be solubilized in water at 40-99°C. These gels can also be solubilized in 0.01-1.0M sodium or potassium periodate at 4-40°C, or in 0.01-1.0M periodic acid at 4-40°C. These gels can also be solubilized in an alkaline solution, e.g., lithium, sodium or potassium hydroxide, lithium, sodium or potassium carbonate, ammonia, trimethylamine, choline, methylamine, or diethylamine at room temperature (20°C).

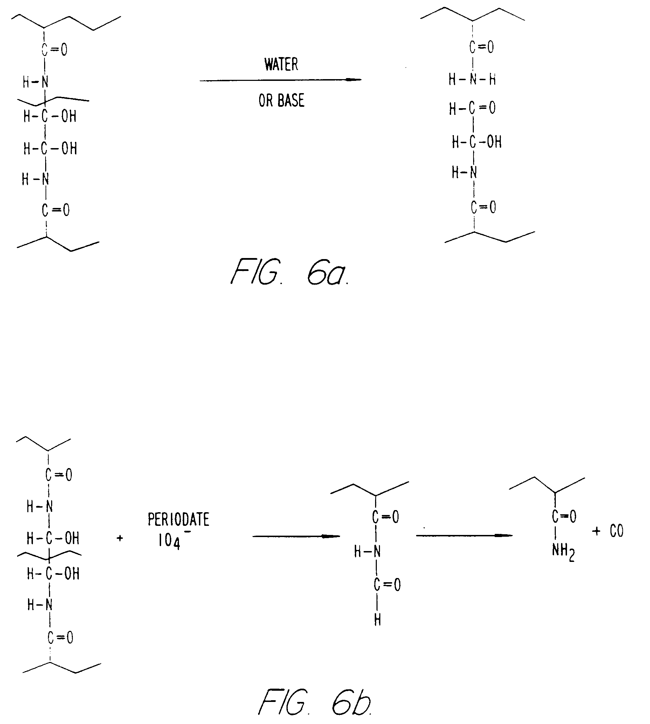

Referring to Figs. 6A and 6B, water or base solubilizes the gel by cleaving the nitrogen-carbon bond of the amide group. Periodate solubilizes by cleaving the vicinal OH group.

### Monoaldehyde

Referring to Fig. 4, there is shown an example of the crosslinking of polyacrylamide by a monoaldehyde. (The R groups and n are as defined above, and the actual formula of the resulting crosslinker polyacrylamide varies, as discussed above, dependent on how many crosslinks occur and whether they form between or within polyacrylamide molecules.) This reaction occurs at a pH generally above 8.5. At lower temperatures little or no crosslinking occurs and no solid gel matrix as defined in this invention is formed. Rather, the polyacrylamide is merely derivatized. See, Cyanimid, supra.

### Biamine

Referring to Fig. 5, an acrylamide monomer is copolymerized with an acrylate monomer by standard techniques to form a polyacrylate. The ester group can then be crosslinked with a biamine, to form a gel matrix. The reaction takes place in air or in vacuum, and leads to gel formation with or without additional heating.

Again, the R groups and n are chosen as discussed above, and the actual formula of the resulting crosslinked polyacrylamide varies (only one example is given in the Figure). R₄ can be any group which allows scissioning of the ester bond when attacked by the biamine. Representative groups include methyl, ethyl, tosyl, hydroxymethyl, hydroxyethyl, glycidyl, chloromethyl, or chloroethyl. R₆ and R₇ can be H, methyl, ethyl or any group that allows and encourages attack of the nitrogen at the carbonyl ester carbon. R₅ can be paraffinic, olefinic or aromatic and may contain, but is not limited to, hydrocarbons. Any other known atom, in particular oxygen, nitrogen, sulfur, boron, fluorine, chlorine, bromine, iodine, sodium or potassium, may be a constituent of the representative R₃ group. Representative R₃ structures which could function as crosslinkers are ethylenediamine, propylenediamine, butylenediamine, 1,5-diaminopentane, 1,6-diaminohexane, 1,3-adamantanediamine, N-methylethylenediamine, phenylenediamine, piperidine, and diethylene triamine.

The following are examples of the above generally described methods. These examples are not limiting in the invention and those in the art will recognize the equivalent chemicals and their proportions which can be used in the methods.

### Example 1: Glyoxal Crosslinking of Homopolymer

Seven grams of acrylamide were diluted to 100 ml with distilled water. 113 mg of ammonium persulfate was added and the solution mixed and purged with nitrogen. TEMED (222 µl) was added, the nitrogen purge removed, and the reaction vessel sealed and stirred until the reaction exotherm dropped back to room temperature (20°C). One ml of 1N triethanolamine, buffered at pH 8.6 with acetic acid, was added to a 20 ml portion of the polymer solution. A 40% solution of glyoxal (100 µl) was then added, and the solution stirred for several minutes and allowed to gel in the desired shaped vessel.

### Example 2: Glyoxal Crosslinking of Copolymer

The crosslinked polyacrylamide was formed as in Example 1, except that 3 grams of N-methylacrylamide and 4 grams of acrylamide were used in place of 7 grams of acrylamide.

### Example 3: Glyoxal Crosslinking

The crosslinked polyacrylamide was formed as in Example 1, except that the reaction was stirred in a sealed vessel without prior nitrogen purge, or in an open vessel under a blanket of nitrogen.

### Example 4: Deionized Acrylamide

The crosslinked polyacrylamide was formed as in Example 1, except that the acrylamide solution was deionized by mixing it with 0.2 gram of a mixed bed ion-exchange resin until the conductivity was minimized. The solution was then filtered to remove the spent resin.

### Example 5

Nine grams of acrylamide were diluted to 100 ml with water and 0.1 gram of ammonium persulfate added. Triethanolamine (0.6 gram) was added and the reaction stirred in a sealed vessel until the reaction exotherm dropped back to room temperature. A 7% sodium carbonate solution (0.1 ml) and 40% glyoxal solution (20 µl) was added to 20 ml of the polymer solution, and the homogeneous mixture poured into an appropriate mold and permitted to gel.

### Example 6

Polyacrylamide powder (5 grams) was diluted to 100 ml in water. To 20 ml of the above solution, 0.1 ml of 7.5% sodium carbonate and 50 µl of 40% glyoxal were added. The homogeneous solution was poured into an appropriate mold and permitted to gel.

### Example 7

Nine grams of acrylamide and 1 gram of methyl acrylate were diluted to 100 ml in water. The solution was mixed and purged with nitrogen. TEMED (222µl) were added, followed by 120mg of ammonium persulfate. The reaction vessel was sealed and stirred until the reaction exotherm dropped back to room temperature (20°C). Ethylenediamine (0.3 gram) was added and the homogeneous mixture poured into an appropriate shaped mold and permitted to gel either at room temperature or at 40°C or at 50°C in an oven.

### Example 8: Gel Solubilization

The gels produced in Examples 1 and 5 were solubilized by dissolving the mass of gel in 3 times its mass of water, and heating at 50°C with intermittent or continual stirring until a homogeneous free flowing liquid was produced. Alternatively, they were dissolved in 3 times their weight of 0.2M sodium periodate, and stirred continually or intermittently at room temperature until the mixture became fluid and homogeneous; or the gels were dissolved in 3 times their weight of 0.1N sodium hydroxide and mixed continually or intermittently until the mixture was fluid and homogeneous.

### Use

Additional applications for the matrices of this invention include shrink molding and wound dressing.

It has been observed that a cross-linked polyacrylamide, as described in Example 5, can be poured into a mold and, after the polymerization process is complete, the rigid gel matrix can be removed from the mold. Upon evaporation of water from the gel matrix, which comprises 91% of the mass of the gel matrix, the remaining gel matrix shrinks to 9% of its original size uniformly and in all dimensions. Thus, a perfect size reduction of the original gel matrix is attained to form a mold. Such a mold can be used for making a detailed mold for industrial use by standard procedures. Since the original gel matrix is about ten times larger than the final mold, the detail of the mold can be significantly more intricate than for molds where no such shrinking is possible.

Wound dressings that currently employ acrylamide or polyacrylamide may be substituted with a gel matrix as described in the present invention. A solution, as described in Example 1, is applied in liquid form to a wound or burn. Upon polymerization and dehydration, a gas permeable thin film impervious to bacteria coats the wound, and protects against infection until such a wound heals. Alternatively, a gel matrix of polyacrylamide, cast as described above, can be applied to the wound with or without a separate supporting matrix, e.g., a nylon or cloth.

Additionally, a non-nutritive cell culture support matrix may be made by casting material of the present invention in trays, vessels or petri dishes. Additives to this matrix can be specified so that media can be designed to support or preclude the support of any organism.

## Claims

1. A method for forming a solid gel matrix, comprising the steps of:
contacting together in solution:
(a) homopolymeric or heteropolymeric polyacrylate molecules comprising one or more ester groups and
(b) an amine adapted to covalently bond with at least two of said ester groups on separate polyacrylamide molecules to covalently bond said separate polyacrylamide molecules together; wherein sufficient said covalent bonds are formed to cause said solution to form a solid gel matrix.

2. The method of claim 1 wherein said solid gel matrix comprises a crosslinked polyacrylate comprising the formula: 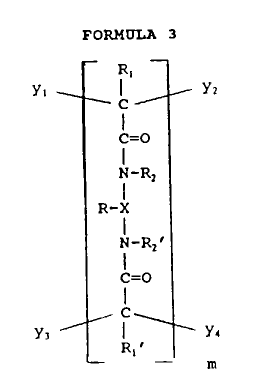 wherein R and X are organic groups comprising between 1 and 10 carbon atoms, or R is a chemical bond, and wherein said R₁, R₂, R₁', and R₂' are the same or different and have a chemical formula chosen from hydrogen or another chemical group which does not interfere with formation of said covalent bond, m is between 1 and 300,000, and wherein each said Y₁, Y₂, Y₃ and Y₄ may be the same or different and each represent a portion of a polyacrylate chain or a hydrogen or a CH₃ group.

3. A polyacrylate gel matrix comprising a crosslinked polyacrylate comprising the formula: 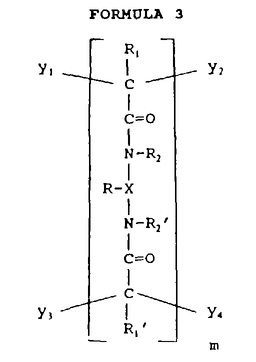 wherein R and X are organic groups comprising between 1 and 10 carbon atoms, or R is a chemical bond, and wherein said R₁, R₂, R₁', and R₂' are the same or different and have a chemical formula chosen from hydrogen or another chemical group which does not interfere with formation of said covalent bond, m is between 1 and 300,000, and wherein each said Y₁, Y₂, Y₃ and Y₄ may be the same or different and each represent a portion of a polyacrylate chain or a hydrogen or a CH₃ group; wherein said gel matrix is adapted to separate HaeIII-treated pBR322 DNA fragments consisting of 587, 540, 504, 458 and 434 base pairs.

4. A kit for forming a gel matrix, comprising in separate containers polyacrylate molecules comprising one or more ester groups, and in a separate container an amine adapted to covalently bond with at least two of said ester groups on separate polyacrylamide molecules to covalently bond said separate polyacrylamide molecules together and to form sufficient said covalent bonds to cause said solution to form a gel matrix.

5. The kit of claim 4 wherein said polyacrylate molecules each have a molecular weight of between 500 and 6 million.

6. The kit of claim 5 wherein said polyacrylate molecules each have a molecular weight of between 50,000 and 600,000.

7. A kit for forming a gel matrix suitable for the separation of biological molecules comprising in a first separate container polyacrylamide molecules suitable for use in the electrophoresis of biological molecules comprising amide groups wherein said molecules each have a molecular weight of between 100,000 and 400,000, and wherein said polyacrylate molecules comprise the chemical formula: 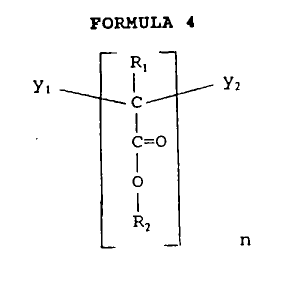 wherein each said R₁ and R₂ may be the same or different and are generally chosen from hydrogen or another chemical group which does not interfere with formation of said covalent bonds, Y₁ and Y₂ may be the same or different and each represent a portion of a polyacrylate chain or a hydrogen or a CH₃ group, and n is between 1 and 300,000, and in a second separate container an aldehyde comprising a plurality of aldehyde groups adapted to covalently bond with at least two of said amide groups on separate polyacrylamide molecules to covalently bond said separate polyacrylamide molecules together and to form said covalent bonds to cause said solution to form a gel matrix suitable for the separation of biological molecules.

8. The kit of claim 7 wherein n is between 500 and 10,000.

9. The kit of claim 7 wherein R₁ and R₂ are selected from hydrogen, methyl, ethyl, propyl, isopropyl, phenyl, 1-hydroxyethyl, 2-hydroxyethyl, hydroxymethyl, 2-hydroxypropyl, 3-hydroxypropyl, 3-dimethylaminopropyl, 2-dimethylaminoethyl, glycinyl, trishydroxymethylmethyl, benzyl, phenyl, carboxy-α-hydroxymethyl methyl ester, and 3-methoxypropyl.

10. The kit of claim 7 wherein R₁ and R₂ are chosen from hydrogen, methyl, ethyl, propyl, isopropyl, phenyl, 1-hydroxyethyl, 2-hydroxyethyl, hydroxymethyl, 2-hydroxypropyl.

11. The kit of claim 7 wherein said aldehyde is a bialdehyde.

12. The kit of claim 11 wherein said bialdehyde has the formula 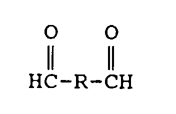 wherein R is an organic group comprising between 1 and 10 carbon atoms, or R is a chemical bond.

13. The kit of claim 12 wherein said bialdehyde is glyoxal.

14. The kit of claim 12 wherein said R is a paraffinic, olefinic, or aromatic moiety which may contain oxygen, nitrogen, sulfur, boron, fluorine, chlorine, bromine, iodine, sodium, or potassium that may be cyclic, linear or branched.

15. A method for purifying a biological macromolecule comprising passing said biological macromolecule through a gel matrix formed by the method of claim 1 to separate said biological macromolecule from other components with which it occurs.

16. The method of claim 15 further comprising causing removing said biological macromolecule from said gel matrix by liquefying said gel matrix.

17. The method of claim 16 wherein said gel matrix is caused to liquify by heating at between 40°C and 100°C.

18. The method of claim 16 wherein said gel matrix is caused to liquify by treatment with periodate.

19. The method of claim 18 wherein said periodate treatment is performed at a temperature between 4°C and 40°C.

20. A polyacrylamide gel matrix comprising polyacrylamide molecules having a molecular weight of between 100,000 and 400,000 held together by a plurality of crosslinking groups, and by no other crosslinking group, each said crosslinking group being identical.

21. The polyacrylamide gel matrix of claim 20 wherein said crosslinking group comprises the formula: 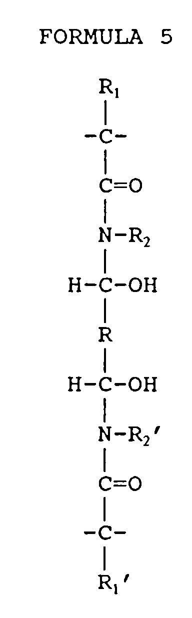 wherein R is an organic group comprising between 1 and 10 carbon atoms, or is a chemical bond, and wherein said R₁, R₂, R₁' and R₂' are the same or different and have a chemical formula chosen from hydrogen or another chemical group which does not interfere with formation of said covalent bond.

22. A polyacrylate gel matrix comprising polyacrylate molecules held together by a plurality of crosslinking groups, each said crosslinking group being identical.

23. The polyacrylate gel matrix of claim 22 wherein said crosslinking group comprises the formula: 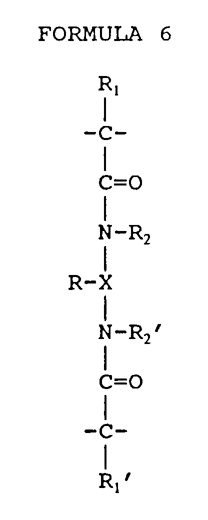 wherein R and X are organic groups comprising between 1 and 10 carbon atoms, or R is a chemical bond, and wherein said R₁, R₂, R₁' and R₂' are the same or different and have a chemical formula chosen from hydrogen or another chemical which does not interfere with formation of said covalent bond.

24. A method for producing a mold, comprising the steps of:
forming a gel matrix by the method of claim 1 into a desired shape, and
causing water within said gel matrix to evaporate and thereby reduce in volume to produce a mold having said desired shape.

25. A gel matrix as claimed in any one of claims 3, 20, 21, 22 or 23, or as produced according to claim 1 or 2, for use in a method of medical treatment.

26. Use of a gel matrix as claimed in any one of claims 3, 20, 21, 22 or 23 or as produced according to claim 1 or 2 in the manufacture of a medicament for use in dressing a wound.

27. A method for culturing cells comprising providing a gel matrix formed by the method of claim 1, said gel matrix comprising nutrient ingredients.
